# EUROPÄISCHE PATENTSCHRIFT

(11) **EP 1 423 455 B1**
(45) Veröffentlichungstag und Bekanntmachung des Hinweises auf die Patenterteilung: **09.11.2005**
(21) Anmeldenummer: 02776928.0
(22) Anmeldetag: 10.08.2002
(51) Int. Cl.: C08G 65/26, B01J 19/10

(54) **VERFAHREN ZUR ERHÖHUNG DER KATALYTISCHEN AKTIVITÄT VON MULTIMETALLCYANIDVERBINDUNGEN**
METHOD FOR INCREASING THE CATALYTIC ACTIVITY OF MULTI-METAL CYANIDE COMPOUNDS
PROCEDE POUR ACCROITRE L'ACTIVITE CATALYTIQUE DE COMPOSES DE CYANURE POLYMETALLIQUE

(30) Priorität: 22.08.2001 DE 10141122
(43) Veröffentlichungstag der Anmeldung: 02.06.2004
(73) Patentinhaber: BASF Aktiengesellschaft, 67056 Ludwigshafen (DE)
(72) Erfinder: BAUM, Eva, 01987 Schwarzheide (DE); GROSCH, Georg, Heinrich, 67098 Bad Dürkheim (DE); BECHTEL, Siegfried, 68623 Lampertheim (DE); RUPPEL, Raimund, 01127 Dresden (DE); HARRE, Kathrin, 01109 Dresden (DE); BOHRES, Edward, 68161 Mannheim (DE)
(86) Internationale Anmeldenummer: PCT/EP2002/008988
(87) Internationale Veröffentlichungsnummer: WO 2003/018667

(56) Entgegenhaltungen:
- EP-A- 0 770 424
- US-A- 5 714 639
- US-A- 5 891 818

## Beschreibung

Die Erfindung betrifft ein Verfahren zur Erhöhung der katalytischen Aktivität von Multimetallcyanidverbindungen, die als Katalysatoren bei der Polymerisation von Alkylenoxiden, insbesondere bei der Herstellung von Polyetheralkoholen eingesetzt werden.

Die Herstellung von Polyetheralkoholen durch katalytische Anlagerung von Alkylenoxiden an H-funktionelle Startsubstanzen unter Verwendung von Multimetallcyanidverbindungen, auch als DMC-Katalysatoren bezeichnet, als Katalysatoren ist seit langem bekannt und wird beispielsweise in EP-A-862,947, EP-A-892,002, EP-A-555,053 oder EP-A-755,716. beschrieben.

Die Anlagerung der Alkylenoxide findet in der Regel in Suspensionsfahrweise statt. Dazu werden die Multimetallcyanidverbindungen entweder als Pulver oder als Paste in die H-funktionellen Startsubstanzen eingerührt, oder man vermischt eine Multimetallcyanidverbindungen enthaltende Katalysatorsuspension mit der H-funktionellen Startsubstanz.

Bei den Multimetallcyanidverbindungen handelt es sich um heterogene Katalysatoren. Das bedeutet, dass bei der Umsetzung die zugängliche Oberfläche und damit die Anzahl der katalytisch aktiven Zentren Einfluss auf die Aktivität des Katalysators haben.

Für die großtechnische Herstellung der Polyetheralkohole ist eine möglichst hohe katalytische Aktivität der Multimetallcyanidverbindungen wünschenswert. Eine hohe katalytische Aktivität erlaubt zum einen die Verringerung der benötigten Katalysatormenge. Eine hohe Aktivität der Katalysatoren führt auch zur Zurückdrängung von unerwünschten Nebenreaktionen, beispielsweise der Bildung von sehr hochmolekularen Anteilen in den Polyetheralkoholen, welche die Eigenschaften der gewünschten Produkte negativ beeinflussen können.

Bei der Verwendung von Multimetallcyanidverbindungen kommt es im allgemeinen zu einer Agglomeration der Partikel. Diese Agglomeration ist immer mit einem Verlust von zugänglicher katalytisch aktiver Oberfläche und damit mit Verringerung der katalytischen Aktivität verbunden. Besonders stark tritt dieses Phänomen bei der Verwendung von Multimetallcyanidverbindungen in Form von Pulver auf. Bei der Trocknung der Multimetallcyanidverbindungen kommt es zu einer irreversiblen Agglomeration der Partikel.

Vermeidet man diesen Trocknungsschritt und verwendet an Stelle von getrockneten Pulvern Multimetallcyanidverbindungen in Form von Pasten oder Suspensionen, wie beispielsweise in US 5,714,639 beschrieben, wird die durch die Trocknung bedingte Agglomeration vermieden, was an der geringeren Größe der Partikel zu erkennen ist. Bei der Lagerung derartiger Suspensionen kommt es jedoch ebenfalls in nennenswertem Maße zu einer unerwünschten Agglomeration der Partikel.

Aufgabe der Erfindung war es, die katalytische Aktivität der Multimetallcyanidverbindungen vor dem Einsatz als Katalysatoren für die Anlagerung von Alkylenoxiden zu erhöhen.

Die Aufgabe konnte überraschenderweise gelöst werden, indem man die als Katalysator für die Polymerisation der Alkylenoxide verwendeten Multimetallcyanidverbindungen einer Deagglomerierung mit Ultraschall unterzieht und den so behandelten Katalysator anschließend in der H-funktionellen Startsubstanz für die Polymerisation der Alkylenoxide verteilt.

Gegenstand der Erfindung ist demzufolge ein Verfahren zur Erhöhung der katalytischen Aktivität von Multimetallcyanidverbindungen für den Einsatz bei der Anlagerung von Alkylenoxiden an H-funktionelle Startsubstanzen, dadurch gekennzeichnet, dass die Multimetallcyanidverbindungen unmittelbar vor ihrer Mischung mit den H-funktionellen Startsubstanzen einer Deagglomerierung mit Ultraschall, unterzogen werden.

Gegenstand der Erfindung ist weiterhin ein Verfahren zur Herstellung von Polyetheralkoholen durch katalytische Anlagerung von Alkylenoxiden an H-funktionelle Startsubstanzen unter Verwendung von Multimetallcyanidverbindungen als Katalysatoren, umfassend die Schritte
a) Mischen mindestens einer Multimetallcyanidverbindung mit mindestens einer H-funktionellen Startsubstanz,
b) Dosierung von Alkylenoxiden zu dieser Mischung bis zur Erreichung des gewünschten Molekulargewichts des Polyetheralkohols,
c) Aufarbeitung des Polyetheralkohols,
wobei unmittelbar vor dem Mischen der Multimetallcyanidverbindung mit der H-funktionellen Startsubstanz die Multimetallcyanidverbindung einer Deagglomerierung, mit Ultraschall, unterzogen wird.

Vorzugsweise sollte die Deagglomerierung der Multimetallcyanidverbindung zu einem Zeitpunkt, der maximal 5 Stunden vor dem Einbringen des Katalysators in die H-funktionelle Startsubstanz liegt, erfolgen. Bevorzugt wird ein Zeitpunkt, der maximal 1 Stunde vor dem Einbringen des Katalysators die H-funktionelle Startsubstanz liegt. Besonders bevorzugt wird ein Zeitpunkt, der maximal 30 min vor dem Einbringen des Katalysators in die H-funktionelle Startsubstanz liegt. Insbesondere bevorzugt wird ein Zeitpunkt, der maximal 5 min vor dem Einbringen des Katalysators in die H-funktionelle Startsubstanz liegt.

Der zu wählende Zeitpunkt für den Beginn der Deagglomerierung wird unter anderem durch die Kinetik der Reagglomeration bestimmt. Ist diese Kinetik langsam, wie bei pulverförmigen Katalysatoren so kann die Behandlung einige Stunden vor der Herstellung der Mischung Multimetallcyanidverbindung und H-funktioneller Startsubstanz erfolgen. Multimetallcyanidverbindungen, die in Form von Pasten oder Suspensionen vorliegen, weisen in der Regel eine rasche Reagglomerationskinetik auf. Daher sollte in diesem Fall die Deagglomerierung innerhalb der letzten Stunde vor der Herstellung der Mischung Multimetallcyanidverbindung und H-funktioneller Startsubstanz erfolgen.

Bei pastenförmigen und insbesondere bei suspensionsartigen Katalysatoren wird die Deagglomerierung durch Anwendung von Ultraschall durchgeführt. Hierbei können Partikelgrößen bis 2 Mikrometer erreicht werden.

Die Behandlung mit Ultraschall hat den Vorteil, dass die Deagglomerierung wirkungsvoll und sehr schonend erfolgt. Es kommt zu keiner Beeinträchtigung der Kristallstruktur der Multimetallcyanidverbindungen.

Durch den variablen Energieeintrag bei der Behandlung mit Ultraschall können zunächst die Ablagerungen gelockert werden. Danach erfolgt die Zerkleinerung der Agglomerate, höchstens jedoch bis zur Primärkorngröße. So kann in schnellster Zeit eine Homogenisierung mit idealer Partikelgrößenverteilung erzielt werden. Die gewünschte mittlere Partikelgröße kann durch die Einstellung der Feldstärke, der Beschallungszeit und der Masse gesteuert werden. Für die Erreichung einer möglichst großen katalytisch aktiven Oberfläche sind mittlere Partikelgrößen von 2 bis 20 Mikrometer vorteilhaft, besonders vorteilhaft sind 2 bis 10 Mikrometer. So kann ein 400-Watt Ultraschallgerät mit 50 % Leistung 10 g einer 5 %ige DMC-Suspension nach 3 Minuten zu einer mittleren Partikelgröße von 12 Mikrometer und nach 12 min zu einer mittleren Partikelgröße von 5 Mikrometer ohne Agglomeratrückstände dispergieren.

Die Multimetallcyanidverbindungen werden nach der Deagglomerierung in die H-funktionellen Startsubstanzen eingebracht.
Die nach dem erfindungsgemäßen Verfahren behandelten Multimetallcyanidverbindungen können in der Startsubstanz fein verteilt werden.

Das Einmischen der erfindungsgemäß behandelten Multimetallcyanidverbindungen in die Startsubstanz erfolgt insbesondere durch Verwendung von Dispergiersystemen, wie Perlmühlen, oder durch starkes Rühren, gegebenenfalls unter Verwendung von Rührern,
die starke Scherkräfte erzeugen. Im Falle des suspensionsartigen Katalysators kann der deagglomerierte Katalysator mittels eines Reaktionsmischers in die H-funktionellen Startsubstanzen eingebracht werden.

Die Multimetallcyanidverbindungen werden in der Regel durch Reaktion mindestens eines Metallsalzes mit mindestens einer Cyanometallatverbindung erzeugt. Als Cyanoametallatverbindungen können Salze oder Säuren verwendet werden. Diese Reaktion ist bekannt und beispielsweise in den oben zitierten Dokumenten beschrieben.

Die in dem erfindungsgemäßen Verfahren eingesetzten Multimetallcyanidverbindungen haben zumeist die allgemeine Formel (I)

M¹ ₐ[M²(CN)_{b}(A)_{c}]_{d} · fM¹ _{g}Xₙ · h(H2O) · eL kP (I) , (I),

wobei
- M¹: ein Metallion, ausgewählt aus der Gruppe, enthaltend Zn2+, Fe2+, Co3+, Ni2+, Mn2+, Co2+, Sn2+, Pb2+, Mo4+, Mo6+, A13+, V4+, V5+, Sr2+, W4+, W6+, Cr2+, Cr3+, Cd2+, Hg2+, Pd2+, Pt2+, V2+, Mg2+, Ca2+, Ba2+, Cu2+,
- M²: ein Metallion, ausgewählt aus der Gruppe, enthaltend Fe2+, Fe3+, Co2+, Co3+, Mn2+, Mn3+, V4+, V5+, Cr2+, Cr3+, Rh3+, Ru2+, Ir3+
bedeuten und M¹ und M² gleich oder verschieden sind,
- A: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- X: ein Anion, ausgewählt aus der Gruppe, enthaltend Halogenid, Hydroxyd, Sulfat, Carbonat, Cyanid, Thiocyanat, Isocyanat, Cyanat, Carboxylat, Oxalat oder Nitrat,
- L: ein mit Wasser mischbarer Ligand, ausgewählt aus der Gruppe, enthaltend Alkohole Aldehyde, Ketone, Ether, Polyether, Ester, Polyester, Polycarbonat, Harnstoffe, Amide, Nitrile, und Sulfide,
- P: ein organischer Zusatzstoff, ausgewählt aus der Gruppe, enthaltend Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylamid-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-costyrol), Oxazolinpolymere, Polyalkylenimine, Maleinsäure und Maleinsäureanhydridcopolymer, Hydroxyethylcellulose, Polyacetate, ionische oberflächen und grenzflächenaktive Verbindungen, Gallensäure oder deren Salze, Ester oder Amide, Carbonsäureester mehrwertiger Alkohole und Glycoside.
sowie
a, b, c, d, g und n so ausgewählt sind, dass die Elektroneutralität der Verbindung gewährleistet ist wobei c auch den Wert 0 haben kann, und
- e: die Koordinationszahl des Liganden, eine gebrochene oder ganze Zahl größer oder gleich 0, bedeutet,
- f: eine gebrochene oder ganze Zahl größer oder gleich 0
- k: eine gebrochene oder ganze Zahl größer oder gleich 0
- h: eine gebrochene oder ganze Zahl größer oder gleich 0 bedeutet.

Die Multimetallcyanidverbindungen der Formel (I) können amorph oder vorzugsweise kristallin sein.

Die erfindungsgemäß aktivierten Katalysatoren können zur Herstellung von Polyetheralkoholen durch Umsetzung von H-funktionellen Startsubstanzen mit Alkylenoxiden verwendet werden.

Die Katalysatoren werden bei der Herstellung der Polyetheralkohole in Konzentrationen kleiner 0,1 Gew.-%, bevorzugt kleiner 500 ppm, insbesondere bevorzugt kleiner 250 ppm, besonders bevorzugt kleiner 100 ppm, jeweils bezogen auf den resultierenden Polyetheralkohol, eingesetzt. Die erfindungsgemäß behandelten Katalysatoren können auf Grund ihrer geringen Teilchengröße in sehr geringen Mengen eingesetzt werden.

Als H-funktionelle Startsubstanzen für die Herstellung von Polyetheralkoholen unter Verwendung der erfindungsgemäß behandelten Multimetallcyanidverbindungen werden insbesondere Alkohole mit einer Funktionalität von 1 bis 8 eingesetzt. Die Funktionalität und die Struktur der als Starter eingesetzten Alkohole richtet sich nach der vorgesehenen Verwendung der Polyetheralkohole.
So werden für Polyetheralkohole, die zur Herstellung von Polyurethan-Elastomeren eingesetzt werden, insbesondere zweifunktionelle Alkohole eingesetzt. Zur Herstellung von Polyetheralkoholen, die zur Herstellung von Polyurethan-Weichschaumstoffen eingesetzt werden, kommen als Startsubstanzen vorzugsweise zweibis vierfunktionelle Alkohole zum Einsatz. Zur Herstellung von Polyetheralkoholen, die zur Herstellung von Polyurethan-Hartschaumstoffen eingesetzt werden, kommen als Startsubstanzen vorzugsweise vier- bis achtfunktionelle Alkohole zum Einsatz.

Als H-funktionelle Startsubstanzen für die Herstellung von Polyetheralkoholen unter Verwendung der erfindungsgemäßen Katalysatoren können auch Umsetzungsprodukte der genannten Alkohole mit Alkylenoxiden eingesetzt werden, wobei diese Umsetzung unter Verwendung von anderen Katalysatoren, insbesondere alkalischen Katalysatoren, wie Kaliumhydroxid, durchgeführt werden kann.

Beispiele für Alkohole, die als H-funktionelle Startsubstanzen für die Herstellung von Polyetheralkoholen eingesetzt werden können, sind Ethylenglykol, Diethylenglykol, Polyethylenglykol, Propylenglykol, Dipropylenglykol, Polypropylenglykol, Glyzerin, Glyzerinalkoxylat, Trimethylolpropan, Trimethylolpropanalkoxylat, Pentaerythrit, Glucose, Saccharose.

Eine weitere Verbindungsklasse, die mit Hilfe der erfindungsgemäß behandelten Multimetallcyanidverbindungen hergestellt werden kann, sind Anlagerungsprodukte von Alkylenoxiden an langkettige Alkohole, beispielsweise Fettalkohole. Derartige Verbindungen werden beispielsweise als Tenside verwendet. Als Alkylenoxide werden üblicherweise aliphatische Alkylenoxide mit 2 bis 10 Kohlenstoffatomen und/oder Styroloxid, vorzugsweise Ethylenoxid und/oder Propylenoxid, eingesetzt.

Die mit den erfindungsgemäß behandelten Multimetallcyanidverbindungen hergestellten Polyetherole weisen überraschenderweise keinen oder einen verringerten Anteil an hochmolekularen Anteilen im Vergleich zu Polyetherolen, die mit nicht erfindungsgemäß behandelten Multimetallcyanid-Katalysatoren hergestellt wurden, auf.

Die Verringerung der hochmolekularen Anteile lässt sich sehr gut an der Viskosität eines Polyetheralkohols ablesen, vorausgesetzt, dass OH-Zahl und Funktionalität der zu vergleichenden Polyetheralkohole gleich ist. Bei einem geringen Gehalt an hochmolekularen Anteilen ist die Viskosität der Polyetheralkohole deutlich geringer.

In den nachstehenden Beispielen soll gezeigt werden, dass durch die Behandlung mit Ultraschall die DMC-Agglomerate beseitigt werden, die katalytisch aktive Oberfläche zugänglicher wird und damit die Steigerung der katalytischen Aktivität erreicht wird.

Durch den Energieeintrag werden auch die Ablagerungen gelockert und eine Dispergierung höchstens bis zur Primärkorngröße erreicht. Für die Erreichung einer größtmöglichen katalytisch aktiven Oberfläche werden vorzugsweise mittlere Partikelgrößen von 2 bis 20 Mikrometer, insbesondere 2 bis 10 Mikrometer, erzeugt.

Durch die erhöhte katalytisch aktive Oberfläche steigt die Aktivität des Katalysators, die Anspringzeit der Synthese der Polyetheralkohole wird kürzer. Die resultierenden Polyetheralkohole haben geringere Viskositäten.

### Beispiele

### Herstellung des Doppelmetallcyanidkatalysators

479,3 g einer wässrigen Zinkacetat-Lösung (13,38 g Zinkacetat-Dihydrat und 2,2 g Pluronic® PE 6200 (BASF AG) gelöst in 150 g Wasser) wurden auf 50°C temperiert. Unter Rühren mit einem Schraubenrührer, Rührenergieeintrag: 1 W / l, wurde anschließend innerhalb von 20 min eine wässrige Hexacyanocobaltatsäure-Lösung (Cobaltgehalt: 9 g / 1), und 1,5 Gew.-% Pluronic® PE 6200, bezogen auf die Hexacyanocobaltatsäure-Lösung) zudosiert. Nach vollständiger Dosierung der Hexacyanocobaltatsäure wurde weitere 5 min bei 50°C gerührt. Anschließend wurde die Temperatur innerhalb einer Stunde auf 40°C gesenkt.

Der gefällte Feststoff wurde über eine Druckfilternutsche von der Flüssigkeit abgetrennt und mit Wasser gewaschen.

Der wasserfeuchte Filterkuchen wurde anschließend in einem Vakuumtrockenschank bei 50°C getrocknet.

Mit dem so hergestellten DMC-Katalysator wurden die folgenden Beispiele durchgeführt.

### Beispiel 1 (Vergleich)

10 g eines Polypropylenglykols mit einem Molekulargewicht Mw von 400 g/mol, im folgenden PPG 400 genannt, wurden 0,03 g des DMC-Katalysators, zugesetzt und 5 min lang mit einem Dispergiergerät Typ Ultra-Turrax® T25 der Fa. IKA zu einem Konzentrat dispergiert. Weitere 120g PPG400 wurden zugesetzt und nochmals mit Ultra-Turrax 5 min lang homogenisiert. Danach wurde diese PPG400/DMC-Mischung in einem Rührautoklaven 2 Stunden bei 100°C bei 3 mbar evakuiert. Anschließend wurden bei 130°C 70g Propylenoxid zudosiert. Nach dem Anstieg von Temperatur und Druck wurden die Maxima erfasst und als Anspringzeit und zugleich Wertung für die Aktivität registriert. Nach dem vollständigen Abreagieren des Propylenoxids, erkennbar an dem Absinken des Drucks auf ein konstantes Niveau, wurde der Polyetheralkohol nach einer Inertisierung mit Stickstoff aus dem Autoklaven abgelassen.

Die Ergebnisse über die Partikelgröße, Anspringzeit sowie die Wertung der Aktivität sind in Tabelle 1 festgehalten.

### Beispiel 2

Es wurde wie in Beispiel 1 verfahren, jedoch wurde der DMC-Katalysator nach der ersten Dispergierung 3 Minuten mit einem Ultraschallgerät Typ UP200S (200Watt) und Sonotrodengröße S14 (Durchmesser 14mm) der Firma Hilscher in PPG G400 als Konzentrat deagglomeriert.

Die Eigenschaften des Ansatzes sind in Tabelle 1 festgehalten.

### Beispiel 3

Es wurde verfahren wie in Beispiel 1, jedoch wurde der DMC-Katalysator nach der ersten Dispergierung 1 Minute in einem Ultraschall-Bad Typ UTR 200 (200 Watt) der Fa. Hilscher in PPG 400 als Konzentrat deagglomeriert.

Die Anspringzeit sowie Analysendaten des Polyetheralkohols sind in Tabelle 1 festgehalten.

**Tabelle 1**

| Beispiel | Dispergiergerät | Mittlere Partikelgröße mm | Anspringzeit min | Wertung der Aktivität |
|---|---|---|---|---|
| 1 | Ultra-Turrax | 18 | Kein Anspringen | Keine Reaktion |
| 2 | Ultraschall-Sonotrode, 200W | 5,6 | 3 | Sehr gut |
| 3 | Ultraschall-Bad, 200W | 6,1 | 5 | Sehr gut |

### Beispiel 4

Zu 10 g PPG 400 wurden 0,015 g DMC-Katalysator zugesetzt und 3 min lang mit dem Ultraschallgerät Typ UP200S (200 Watt) und Sonotrode S14 der Firma. Hilscher zu einem Konzentrat dispergiert. Weitere 120 g PPG400 wurden zugesetzt und nochmals mitttels Ultra-Turrax 5 min lang homogenisiert. Danach wurde wie im Beispiel 1 verfahren.

Die Ansatzdaten und Eigenschaften sind in Tabelle 2 festgehalten.

### Beispiel 5

Es wurde wie in Beispiel 4 verfahren, jedoch wurde der DMC-Katalysator 6 min lang mit dem Ultraschallgerät im PPG400 als Konzentrat deagglomeriert.

Die Ergebnisse sind in Tabelle 2 ausgeführt.

Die Ergebnisse sind in Tabelle 2 festgehalten.

**Tabelle 2**

| Beispiel | Deagglomerierzeit min | Mittlere Partikelgröße mm | Anspringzeit min | Wertung der Aktivität |
|---|---|---|---|---|
| 4 | 3 | 8,6 | 10 | gut |
| 5 | 6 | 5,5 | 6 | sehr gut |

### Beispiel 6: Polyolsynthese mit reduzierter Menge an DMC-Katalysator

Zu 95 g eines Propoxylates aus Glyzerin und Propylenoxid mit einer Hydroxylzahl von 152 mg KOH/g wurden 5 g DMC-Katalysator zugesetzt und 2 mal 8 min lang mit einem Ultraschallgerät Typ UP1000 und Sonotrode S 22 der Fa. Hilscher unter Stickstoff zu einem Konzentrat dispergiert.

Für die Synthese eines Weichschaumpolyols wurden 20 g dieser DMC-Suspension in einem 20-L-Rührreaktor zu 6,3 kg eines Propoxylates aus Glyzerin und Propylenoxid mit einer Hydroxylzahl von 152 mg KOH/g unter Stickstoff eingerührt. Der Kesselinhalt wurde danach 1,5 h bei 110°C im Vakuum behandelt. Bei 115°C wurden 3,5 bar Stickstoff zugegeben und anschließend innerhalb von 2,5 h zuerst 11,5 kg eines Gemisches aus 9,7 kg Propylenoxid und 1,8 kg Ethylenoxid, anschließend 2,0 kg Propylenoxid zudosiert. Bereits 10 min nach Dosierbeginn konnte ein Anspringen der Reaktion beobachtet werden. Es wurde weitere 0,5 Stunden gerührt und die Reaktionsmischung bei 115°C und 8 mbar entgast. Der entstandene Polyetheralkohol wies folgende Kennwerte auf:

| | |
|---|---|
| Hydroxylzahl | 49 mg KOH/g; |
| Viskosität bei 25°C | 1700 mPa s; |
| Gehalt an Zn/Co | 13 / 6 ppm |

### Beispiel 7 (Vergleich)

Wie im Beispiel 9 wurden zu 95 g eines Propoxylates aus Glyzerin und Propylenoxid mit einer Hydroxylzahl von 152 mg KOH/g 5 g DMC-Katalysator zugesetzt und nicht mit Ultraschall, sondern 10 min lang mit einem Ultraturrax Typ T50 der Fa. IKA unter Stickstoff zu einem Konzentrat dispergiert. Die Herstellung des Polyetheralkohols mit Hilfe dieser Suspension erfolgte analog dem Beispiel 9. Die Anspringzeit nach Dosierbeginn betrug 15 min. Der entstandene Polyetheralkohol wies folgende Kennwerte auf:

| | |
|---|---|
| Hydroxylzahl | 49 mg KOH/g; |
| Viskosität bei 25°C | 2200 mPa s; |
| Gehalt an Zn/Co | 13 / 7 ppm |

## Patentansprüche

1. Verfahren zur Erhöhung der katalytischen Aktivität von Multimetallcyanidverbindungen für den Einsatz als pastenförmige Katalysatoren für die Anlagerung von Alkylenoxiden an H-funktionelle Startsubstanzen, **dadurch gekennzeichnet, dass** die Multimetallcyanidverbindungen unmittelbar vor ihrer Mischung mit den H-funktionellen Startsubstanzen einer Deagglomerierung mit Ultraschall unterzogen werden.

2. Verfahren nach Anspruch 1, **dadurch gekennzeichnet, dass** die Deagglomerierung maximal 30 Minuten vor dem Einbringen der Multimetallcyanidverbindungen in die H-funktionelle Startsubstanz durchgeführt wird.

3. Verfahren nach Anspruch 1, **dadurch gekennzeichnet, dass** die Deagglomerierung maximal 5 Minuten vor dem Einbringen der Multimetallcyanidverbindungen in die H-funktionelle Startsubstanz durchgeführt wird.

4. Verfahren zur Herstellung von Polyetheralkoholen durch katalytische Anlagerung von Alkylenoxiden an H-funktionelle Startsubstanzen unter Verwendung von Multimetallcyanidverbindungen als Katalysatoren, umfassend die Schritte
a) Mischen mindestens einer Multimetallcyanidverbindung mit mindestens einer H-funktionellen Startsubstanz,
b) Dosierung von Alkylenoxiden zu dieser Mischung bis zur Erreichung des gewünschten Molekulargewichts des Polyetheralkohols, Aufarbeitung des Polyetheralkohols,
**dadurch gekennzeichnet, dass** unmittelbar vor dem Mischen der Multimetallcyanidverbindung mit der H-funktionellen Startsubstanz die Multimetallcyanidverbindung einer Deagglomerierung mit Ultraschall unterzogen wird.

## Claims

1. A method of increasing the catalytic activity of multimetal cyanide compounds for use as catalysts in paste form for the addition of alkylene oxides onto H-functional starter substances, which comprises subjecting the multimetal cyanide compounds to deagglomeration with ultrasound immediately before they are mixed with the H-functional starter substances.

2. A method as claimed in claim 1, wherein deagglomeration is carried out not more than 30 minutes before the multimetal cyanide compounds are introduced into the H-functional starter substance.

3. A method as claimed in claim 1, wherein deagglomeration is carried out not more than 5 minutes before the multimetal cyanide compounds are introduced into the H-functional starter substance.

4. A process for preparing polyether alcohols by catalytic addition of alkylene oxides onto H-functional starter substances using multimetal cyanide compounds as catalysts, which comprises the steps
a) mixing at least one multimetal cyanide compound with at least one H-functional starter substance,
b) metering alkylene oxides into this mixture until the desired molecular weight of the polyether alcohol has been reached and working up the polyether alcohol,
wherein the multimetal cyanide compound is subjected to deagglomeration with ultrasound immediately before it is mixed with the H-functional starter substance.

## Revendications

1. Procédé pour augmenter l'activité catalytique de composés de cyanure polymétallique à mettre en oeuvre comme catalyseurs en forme de pâtes pour l'addition d'oxydes d'alkylène sur des substances de départ à fonction H, **caractérisé en ce que** les composés de cyanure polymétallique sont, immédiatement avant leur mélange avec les substances de départ à fonction H, soumis à une désagglomération par des ultrasons.

2. Procédé suivant la revendication 1, **caractérisé en ce que** la désagglomération est effectuée au maximum 30 minutes avant l'introduction des composés de cyanure polymétallique dans la substance de départ à fonction H.

3. Procédé suivant la revendication 1, **caractérisé en ce que** la désagglomération est effectuée au maximum 5 minutes avant l'introduction des composés de cyanure polymétallique dans la substance de départ à fonction H.

4. Procédé de préparation de polyéther-alcools par addition catalytique d'oxydes d'alkylène sur des substances de départ à fonction H en faisant usage de composés de cyanure polymétallique comme catalyseurs, comprenant les étapes
a) de mélange d'au moins un composé de cyanure polymétallique avec au moins une substance de départ à fonction H,
b) de dosage d'oxydes d'alkylène à ce mélange jusqu'à l'obtention d'un poids moléculaire souhaité du polyéther-alcool, de traitement du polyéther-alcool,
**caractérisé en ce que**, directement avant le mélange du composé de cyanure polymétallique avec la substance de départ à fonction H, le composé de cyanure polymétallique est soumis à une désagglomération par des ultrasons.
